# EUROPÄISCHE PATENTSCHRIFT

(11) **EP 3 465 152 B1**
(45) Veröffentlichungstag und Bekanntmachung des Hinweises auf die Patenterteilung: **24.02.2021**
(21) Anmeldenummer: 17732317.7
(22) Anmeldetag: 29.05.2017
(51) Int. Cl.: G01N 21/39, G01N 21/90, G01N 21/65, G01N 21/27, G01N 35/04, B65B 31/00, B65B 57/00, B65B 9/04

(54) **VERFAHREN UND VERPACKUNGSMASCHINE ZUR BESTIMMUNG DER GASKONZENTRATION IN EINER VERPACKUNG**
METHOD AND PACKAGING APPARATUS FOR DETERMINING THE GAS CONCENTRATION IN A PACKAGE
MÉTHODE ET MACHINE D'EMBALLAGE POUR DETERMINER LA CONCENTRATION DE GAZ DANS UN EMBALLAGE

(30) Priorität: 27.05.2016 DE 102016209207; 20.06.2016 EP 16175264; 11.07.2016 DE 102016212574; 15.07.2016 DE 102016213009; 15.07.2016 DE 102016213010
(43) Veröffentlichungstag der Anmeldung: 10.04.2019
(73) Patentinhaber: GEA Food Solutions Germany GmbH, 35216 Biedenkopf-Wallau (DE)
(72) Erfinder: HÜBNER, Gerd, 57234 Wilnsdorf (DE)
(74) Vertreter: Kutzenberger Wolff & Partner
(86) Internationale Anmeldenummer: PCT/EP2017/062900
(87) Internationale Veröffentlichungsnummer: WO 2017/203061

(56) Entgegenhaltungen:
- EP-A1- 2 256 042
- WO-A1-2010/145892
- WO-A1-2014/098757
- WO-A1-2014/191438
- DE-A1-102014 202 596
- US-A1- 2005 084 974
- US-A1- 2007 212 792
- M. LEWANDER ET AL: "Food monitoring based on diode laser gas spectroscopy", APPLIED PHYSICS B: LASERS AND OPTICS., Bd. 93, Nr. 2-3, 30. September 2008 (2008-09-30), Seiten 619-625, XP055251197, DE ISSN: 0946-2171, DOI: 10.1007/s00340-008-3192-2
- COCOLA L ET AL: "Validation and calibration of a TDLAS oxygen sensor for in-line measurement on flow-packed products", PROCEEDINGS VOLUME 9025 IS&T/SPIE ELECTRONIC IMAGING | 2-6 FEBRUARY 2014 INTELLIGENT ROBOTS AND COMPUTER VISION XXXI: ALGORITHMS AND TECHNIQUES, SPIE, US, Bd. 9855, 12. Mai 2016 (2016-05-12), Seiten 98550F-98550F, XP060065766, ISSN: 0277-786X, DOI: 10.1117/12.2228911
- JENSEN P N ET AL: "Storage stabilities of pork scratchings, peanuts, oatmeal and muesli: Comparison of ESR spectroscopy, headspace-GC and sensory evaluation for detection of oxidation in dry foods", FOOD CHEMISTRY, ELSEVIER LTD, NL, Bd. 91, Nr. 1, 1. Juni 2005 (2005-06-01), Seiten 25-38, XP027770292, ISSN: 0308-8146 [gefunden am 2005-06-01]

## Beschreibung

Die vorliegende Erfindung betrifft ein Verfahren zur Bestimmung der Konzentration mindestens einer Komponente der Gasphase in einer Verpackung mit einem Sensor.

Lebensmittelverpackungen erhöhen die Haltbarkeit von Lebensmitteln, aber nur, wenn sie dicht sind. Dabei ist insbesondere die Siegelnaht zwischen einer Verpackungsmulde, in der sich das Lebensmittel befindet und einer Oberfolie, die an die Verpackungsmulde gesiegelt ist, eine Schwachstelle, weil sie verschmutzt sein kann und/oder die erforderliche Temperatur, der erforderliche Druck und/oder die benötigte Siegelzeit zumindest lokal nicht eingehalten wird und/oder ungewollte Falten in Oberfolie und/oder Verpackungsmulde bestehen. Solche Verpackungen sind dann von Anfang an oder nach einiger Zeit undicht. Weiterhin ist es möglich, dass bei Verpackungen mit einer Austauschatmosphäre dieser Austausch unvollständig ist, was wiederum die Verwendungsdauer der darin verpackten Lebensmittel oder sonstiger Verpackungsgüter reduzieren kann. Weiterhin ist es möglich, dass die Barriereeigenschaften mindestens einer verwendeten Folie zumindest partiell fehlerhaft sind oder versehentlich der falsche Folientyp verwendet wurde, so dass beispielsweise ungewollt mindestens ein Bestandteil der die Verpackung umgebenden Atmosphäre, zum Beispiel Sauerstoff, durch die Folie, also die Oberfolie und/oder die Folie der Verpackungsmulde, in die Verpackung in zu hohem Maße eindiffundiert, was einer Undichtigkeit gleichkommt.

Aus dem Stand der Technik sind Verfahren zur Bestimmung der Sauerstoffkonzentration bekannt, beispielsweise die WO 2015172166 A1, die aber ein zusätzliches Mittel, beispielsweise eine auf die Innenseite der Verpackung aufgebrachte Indikatorsubstanz, innerhalb der Verpackung vorsehen, deren Verhalten, beispielsweise eine ausgesendete Wellenlänge, sich in Abhängigkeit von der Konzentration von Komponenten der Atmosphäre innerhalb der Verpackung ändert.

Es besteht seit langem deshalb ein Bedarf, solche fehlerhaften Verpackungen zerstörungsfrei und ohne zusätzliches Mittel innerhalb der Verpackung zu erkennen und auszusortieren und/oder das Verpackungsverfahren und/oder eine Verpackungsmaschine und/oder eine Verpackung möglichst effizient zu gestalten.

Aus dem Dokument WO2014191438 ist außerdem ein Verfahren bekannt, mit welchem die Gaskonzentration eines Gases innerhalb einer Verpackung mittels eines Lichtstrahls ermittelt werden kann. Der Lichtstrahl wird von einer Lichtquelle in die Verpackung ausgesendet und das von der Verpackungsgut oder einer Reflexionsfläche oder von der Verpackung zurück reflektierte Licht wird von einem Empfänger empfangen. Dieses Dokument offenbart außerdem, dass eine Kalibrierung mit Hilfe eines Behälters mit einer bekannten Gaskonzentration vorgenommen werden kann.

Die Erfindung wird durch das Verfahren des Anspruchs 1 definiert.

Die vorliegende Erfindung betrifft ein Verfahren zur Bestimmung der Konzentration mindestens einer Komponente der Gasphase in einer Verpackung, in der ein Verpackungsgut, insbesondere ein Lebensmittel oder ein sonstiges sensibles, beispielsweise steriles Verpackungsgut, vorzugsweise in einer Kunststofffolie, die auch mehrlagig und aus verschiedenen Werkstoffen bestehend ausgeführt sein kann, verpackt ist. Die Verpackung weist eine vorzugsweise geformte, besonders bevorzugt tiefgezogene Verpackungsmulde auf, die mit dem Verpackungsgut befüllt und dann mit einer Deckelfolie, auch Oberfolie genannt, verschlossen wird. Die Deckelfolie wird an die Verpackungsmulde gesiegelt. Vor dem Siegeln wird in der Verpackungsmulde vorzugsweise ein Gasaustausch vorgenommen. Dafür wird zunächst die Luft in der Verpackungsmulde abgesaugt und dadurch ein Unterdruck in der Verpackungsmulde erzeugt. Danach wird vorzugsweise das Austauschgas, insbesondere ein Inertgas, beispielsweise CO₂ und/oder N₂ in die Verpackungsmulde eingeleitet und dadurch die Sauerstoffkonzentration in der Verpackungsmulde abgesenkt, wodurch sich beispielsweise die Haltbarkeit des verpackten Lebensmittels erhöht. Es ist aber auch möglich die in der Verpackungsmulde befindliche Atmosphäre mit dem Austauschgas aus der Verpackung zu spülen, also die Atmosphäre in der Verpackungsmulde ohne vorheriges Erzeugen eines Unterdrucks in der Verpackungsmulde zu ändern. Weiterhin ist es möglich lediglich einen Unterdruck in der Verpackung zu erzeugen und dadurch das vorhandene Gasvolumen und/oder beispielsweise den Sauerstoffpartialdruck zu reduzieren. Der Gasaustausch/Unterdruck kann in und/oder vor der Siegelstation und vor bzw. vorzugsweise nach dem Befüllen der Verpackungsmulde mit Verpackungsgut stattfinden werden. Weiterhin wird vorzugsweise in der Siegelstation und/oder stromabwärts von dem Gasaustausch und/oder stromabwärts von der Siegelstation, d.h. in der geschlossenen Verpackung, die Konzentration mindestens eines Bestandteils, beispielsweise die Sauerstoffkonzentration, der veränderten Atmosphäre mit einem Sensor gemessen. Diese Messung kann zur Klassierung der Verpackungen in zu verkaufende und zu verwerfende Verpackungen herangezogen werden.

Zusätzlich kann das Signal dieses Sensors an eine Steuerung/Regelung der Verpackungsmaschine übermittelt werden, die daraus den Gasaustausch steuert/regelt und/oder beispielsweise den Sollwert für den Unterdruck und/oder den Sollwert für den Druck des Austauschgases beim und/oder nach dem Gasaustausch und/oder die Sollmenge an Austauschgas errechnet. Dies erfolgt beispielsweise durch einen Vergleich mit Vorgabewerten. Bei dieser Ausführungsform kann so zudem auf die Qualität des Austauschgases geschlossen werden, dessen Konzentration beispielsweise in der Zuleitung des Austauschgases gemessen / geprüft werden kann. Gleichermaßen kann beispielsweise der Sauerstoffgehalt in anwesenden Flüssigkeiten und/oder die Feuchtigkeit und/oder der Wasserdampfgehalt der Atmosphäre, beispielsweise beim Prozess der Dampf-Evakuierung, in der Verpackung gemessen werden. Durch eine oder mehrere dieser nicht beanspruchten Maßnahmen kann der Energieverbrauch einer Verpackungsmaschine reduziert und/oder deren Taktzahl erhöht oder zumindest verändert werden. Außerdem werden Verpackungen mit einer unzureichenden Austauschatmosphäre vermieden oder zumindest minimiert. Der Fachmann versteht, dass das Signal des Sensors zusätzlich oder ausschließlich an eine Steuerung/Regelung außerhalb der Verpackungsmaschine übermittelt werden kann. Diese sogenannte externe Steuerung kommuniziert ihrerseits vorzugsweise mindestens mit Teilen der Verpackungsmaschine(n) und/oder benachbarten Maschinen, beispielsweise mit einem Etikettierer und/oder Ausschleusungsgerät, der/das beispielsweise im Bereich der Verpackungsmaschine oder dahinter wirken, und/oder auch mit Maschinen der weiterverarbeitenden und/oder vorgelagerten Prozesse.

Für das erfindungsgemäße Verfahren kommt ein Sensor zum Einsatz, der einen Sender aufweist, der elektromagnetische Wellen in die Verpackung ausstrahlt. Bei den elektromagnetischen Wellen handelt es sich vorzugsweise um Laserstrahlung, die insbesondere durch eine Laserdiode erzeugt wird. Während der Messung kann die Frequenz und/oder die Wellenlänge der elektromagnetischen Strahlung verändert werden oder konstant bleiben. Die elektromagnetischen Wellen können in die noch offene und/oder in die bereits geschlossene Verpackung gestrahlt werden. Die Strahlung wird von einem Empfänger zumindest teilweise aufgefangen und einer Analyse, vorzugsweise einer Spektralanalyse unterzogen werden. Durch die Veränderung der Strahlung beispielsweise in Bezug auf die Frequenz, das Frequenzspektrum, die Amplitude, die Phasenverschiebung, die Feldstärke, die Polarisierung und/oder die Strahlungsenergie kann auf die Konzentration mindestens einer Komponente in der Gasphase der Verpackung geschlossen werden. Vorzugsweise wird die Strahlung an die zu analysierende(n) Komponente(n) der Gasphase angepasst.

Vorzugsweise wird die Konzentration von CO₂, N₂ und/oder O₂ in der Gasphase der Verpackung ermittelt.

Vorzugsweise erfolgt die Messung mehrfach hintereinander, beispielsweise um zu ermitteln, wann die gewünschte Konzentration in der Gasphase erreicht ist und/oder um einen Mittelwert zu berechnen. Danach kann der Gasaustausch beendet und die jeweilige Verpackung geschlossen werden.

Basierend auf dieser Messung kann eine Verpackungsmaschine geregelt werden, insbesondere die Modifizierung der Atmosphäre in der Verpackung und/oder es kann eine Klassierung der Verpackungen stattfinden.

Für den Fall einer taktweise agierenden Verpackungsmaschine, bei der bei jedem Takt ein Format von X x Y Verpackungen hergestellt werden, wird vorzugsweise in jeder Packung einzeln die jeweilige Konzentration ermittelt.

Der Sender und der Empfänger können in einem Gerät integriert sein oder als getrennte Geräte zur Verfügung gestellt werden.

Gemäß der vorliegenden Erfindung wird insbesondere der Teil der empfangenen Strahlung identifiziert und/oder einer Analyse, vorzugsweise einer Spektralanalyseanalyse unterzogen, der die Atmosphäre in der Verpackung zumindest teilweise durchlaufen bzw. durchstrahlt hat und vorzugsweise in Richtung eines Empfängers reflektiert wurde. Die vom Sender ausgesendeten elektromagnetischen Wellen durchlaufen nach dem Verlassen des Senders zuerst die die Verpackung umgebende Atmosphäre, dann die Oberfolie, anschließend die Atmosphäre in der Verpackung und werden von einer Gasphase dieser Atmosphäre und/oder dem Verpackungsgut und/oder einem Reflektor in Richtung eines Empfängers reflektiert und durchlaufen im Folgenden zunächst zumindest wieder einen Teil der Atmosphäre in der Verpackung, dann die Oberfolie und abschließend die die Verpackung umgebende Atmosphäre, bevor sie vom Empfänger empfangen werden. Für die Analyse der empfangenen Strahlung ist insbesondere der Teil des Strahlenganges relevant, der eine Wegstrecke innerhalb der Verpackung beinhaltet, wobei die Wellen die Atmosphäre in der Verpackung durchlaufen und dabei beispielsweise in Bezug auf die Frequenz, das Frequenzspektrum, die Amplitude, die Phasenverschiebung, die Feldstärke, die Polarisierung und/oder die Strahlungsenergie verändert werden.

Gemäß einer bevorzugten Ausführungsform der vorliegenden Erfindung wird insbesondere der Teil der empfangenen Strahlung, der nur von der die Verpackung umgebenden Atmosphäre und/oder der Außenfläche der Verpackung reflektiert wird, identifiziert und/oder gezielt berücksichtigt und/oder gefiltert, indem er beispielsweise durch filtern aus dem Ergebnis der Analyse entfernt wird. Der Einfluss der die Verpackung umgebenden Atmosphäre kann durch Kalibrierung eliminiert werden. Erfindungsgemäß wird der Empfänger kalibriert. Bei der Kalibrierung wird der Einfluss der Verpackung und des Verpackungsguts berücksichtigt.

Gemäß einer anderen bevorzugten Ausführungsform der vorliegenden Erfindung werden die elektromagnetischen Wellen getaktet ausgesendet, wobei Wellenpakete ausgesendet werden, die von jeweils gleicher und/oder unterschiedlicher, insbesondere zeitlicher Länge, sein können und die von Sendepausen beabstandet werden, die auch von jeweils gleicher und/oder unterschiedlicher Länge sein können, wobei die Wellenpakete und/oder Sendepausen vorzugsweise in Mustern gestaltet sind, die für die Analyse, vorzugsweise Spektralanalyse und/oder das Identifizieren des Wellenabschnitts, der zumindest Teile der Atmosphäre innerhalb der Verpackung durchlaufen hat, vorteilhaft sind.

Gemäß einer anderen bevorzugten Ausführungsform der vorliegenden Erfindung wird die die Verpackung umgebende Atmosphäre so gestaltet, dass sie die eine oder mehreren Komponenten der Gasphase innerhalb der Verpackung, deren Konzentration ermittelt werden soll, nicht enthält, beispielsweise indem der Strahlengang der ausgesendeten und empfangenen elektromagnetischen Wellen mit einem hochreinen Schutzgas geflutet ist, wenn die Sauerstoffkonzentration innerhalb der Verpackung ermittelt werden soll, wobei das Schutzgas die typische Veränderung der Wellen, die diese durch die Gasphase in der Verpackung erfahren, nicht oder nur marginal beeinflusst.

Gemäß einer nicht beanspruchten Ausführungsform wird das Schutzgas und/oder die davon kontaminierte Atmosphäre abgesaugt, vorzugsweise in Nähe seiner Ausbringung abgesaugt, und entsorgt, beispielsweise um den Werker zu schützen.

Gemäß einer anderen bevorzugten Ausführungsform der vorliegenden Erfindung wird die Analyse der empfangenen Strahlung mittels Raman-Spektroskopie durchgeführt.

Gemäß einer anderen bevorzugten Ausführungsform der vorliegenden Erfindung wird die Analyse der empfangenen Strahlung mittels Laser Absorptionsspektroskopie (LAS) oder Abstimmbare Diodenlaserabsorptionsspektroskopie (Tuneable Diode Laser Absorption Spectroscopy TDLAS) durchgeführt.

Gemäß einer anderen bevorzugten Ausführungsform der vorliegenden Erfindung wird die Analyse der empfangenen Strahlung mittels ESR-Oxymetrie bzw. ESR-Spektroskopie durchgeführt, wobei vorzugsweise die Signalverbreiterung aufgrund des Triplett-Grundzustands des Disauerstoffs berücksichtigt wird.

Die Kalibrierung des Empfängers kann beispielsweise dadurch geschehen, dass ein Raum mit einer klar definierten Gasphase von den elektromagnetischen Strahlen durchstrahlt wird und diese Strahlung von dem Empfänger empfangen wird. Dieser Raum ist eine Verpackung, die auch das Verpackungsgut, das während der Produktion verpackt werden soll, aufweist. Bei dieser Verpackung ist die Konzentration der zu messenden Gaskomponente bekannt. Hierdurch st es möglich den Einfluss, den die Verpackung und das Verpackungsgut auf die Wellen der Strahlung haben, zu berücksichtigen. Beispielsweise kann es sein, dass bei Durchstrahlen der Deckelfolie, bei der Reflexion an dem Verpackungsgut oder an der Verpackungsmulde die Strahlung unabhängig von der Konzentration der jeweiligen Komponente in der Gasphase der Verpackung verändert wird. Diese Einflüsse können durch eine solche Kalibrierung zumindest reduziert werden.

Gemäß einer bevorzugten Ausführungsform der vorliegenden Erfindung wird die Temperatur der Gasphase und/oder des Verpackungsgutes und/oder der Verpackung und/oder der Reflexionsfläche gemessen und bei der Analyse, vorzugsweise der Spektralanalyse und/oder bei der Kalibrierung berücksichtigt.

Weiterhin bevorzugt wird der Druck in der Verpackung gemessen und bei der Analyse, vorzugsweise der Spektralanalyse und/oder bei der Kalibrierung berücksichtigt.

Vorzugsweise wird jede Verpackung einzeln untersucht. Dafür können für jede Verpackung ein Sender und ein Empfänger vorgesehen sein. Es ist aber auch denkbar, dass weniger Sender/Empfänger als Verpackungen eines Formates vorgesehen sind. Diese kann dadurch realisiert werden, dass mindestens ein Sender/Empfänger relativ zu den zu vermessenden Verpackungen bewegt wird und/oder die Verpackungen relativ zu einem Sender/Empfänger bewegt werden. Alternativ oder zusätzlich können Mittel vorgesehen werden, die die ausgestrahlten Wellen auf die Verpackungen mindestens eines Formates verteilen und/oder die Strahlung, die die jeweilige Verpackung durchstrahlt hat, so in Richtung eines Empfängers zu bündeln, dass weniger Empfänger als Verpackungen eines Formates benötigt werden.

Weiterhin bevorzugt wird jede Verpackung mehrfach untersucht. Dadurch kann beispielsweise festgestellt werden, ob sich die Konzentration der gemessenen Komponente der Gasphase verändert. Dadurch können beispielsweise undichte Nähte an der Verpackung identifiziert werden. Vorzugsweise wird der Druck in der jeweiligen Verpackung und/oder der Umgebungsdruck der jeweiligen Verpackung zwischen den beiden Messungen verändert, um beispielsweise Veränderungen einer Konzentration einer Komponente in der Gasphase der Verpackung zu beschleunigen. Vorzugsweise wird auch diese Messung kalibriert, um insbesondere den Einfluss der Verpackung und/oder des Verpackungsgutes auf die Konzentration der jeweiligen Komponente in der Gasphase, beispielsweise durch Ab- und/oder Adsorption, bei der Messung zu berücksichtigen.

Vorzugsweise wird die jeweilige Verpackung bei der Messung bewegt, d.h. sie findet vorzugsweise bei einem Vorzug einer taktweise operierenden Verpackungsmaschine statt.

Diese bevorzugte Ausführungsform der vorliegenden Erfindung hat den Vorteil, dass weniger Sender/Empfänger benötigt werden, weil sich die Verpackungen relativ zu dem Sender und/oder Empfänger bewegen. Zusätzlich wird Zeit gespart, so dass die Messung nicht die Taktzahl der Verpackungsmaschine reduziert. Vorzugsweise beträgt die Relativgeschwindigkeit zwischen dem Sensor und der Verpackung 1 - 2 m/s, insbesondere 1,2 - 1,6 m/s.

Im Weiteren wird eine nicht beanspruchte Verpackungsmaschine mit einer Siegelstation, die eine Oberfolie auf eine Verpackungsmulde siegelt, beschrieben. Stromabwärts von und/oder an/in der Siegelstation ist ein Sensor vorgesehen, der eine Konzentration einer Substanz der Gasphase in der Verpackung misst, wobei der Sensor einen Sender aufweist, der elektromagnetische Wellen in die Verpackung aussendet, die von einem Empfänger zumindest teilweise aufgefangen und einer Analyse, vorzugsweise einer Spektralanalyse unterzogen werden.

Bei der nicht beanspruchten Verpackungsmaschine kann es sich um einen sogenannten Thermoformer oder um einen sogenannten Traysealer oder um eine Schlauchbeutelmaschine handeln. Die Verpackungsmaschine weist eine Siegelstation auf, mit der eine Oberfolie auf die Verpackungsmulde gesiegelt wird, nachdem diese mit einem Verpackungsgut, insbesondere einem Lebensmittel befüllt worden ist.

Die Verpackungsmaschine weist einen ersten Sensor auf, der eine Konzentration einer Substanz, insbesondere die Sauerstoffkonzentration der veränderten Gasphase in der Verpackung misst. Dafür ist an der Verpackungsmaschine mindestens ein Sender vorgesehen, der elektromagnetische Wellen, insbesondere Laserlicht ausstrahlt, die in die jeweilige Verpackung eindringt und dort aufgrund der Konzentration der zu analysierenden Komponente der Gasphase in der Verpackung verändert wird. Diese veränderte Strahlung wird aus der Verpackung in Richtung eines Empfängers gestrahlt, der die Veränderung der Strahlung aufgrund von einer Analyse, vorzugsweise einer Spektralanalyse feststellen kann. Eine Auswerteeinheit zeigt dann die Konzentration der jeweiligen Komponente an.

Vorzugsweise weist die Verpackungsmaschine für jede Verpackung einen separaten Sender/Empfänger oder mehrere Sender/Empfänger pro Verpackung auf. Es ist aber auch möglich, dass ein Sender und/oder Empfänger mehreren Verpackungen eines Formates zugeordnet wird, beispielsweis einem gesamten Format oder einer Reihe oder einer Spalte eines Formates. Für den Fall einer Abweichung eines Messwertes werden die betroffenen Verpackungen dann beispielsweise einzeln nachanalysiert und nur die "Schlechtpackungen" aussortiert oder alle aussortiert. Alternativ werden die Verpackungen während einer Bewegung längs eines Senders und/oder Empfänger bewegt. Auch in diesem Fall kann die Zahl der Sender und/oder Empfänger die Zahl der Verpackungen eines Formates untersch reiten.

Zwischen dem Sender und den Verpackungen kann ein Verteiler für die elektromagnetischen Wellen vorgesehen sein. Auch in diesem Fall kann die Zahl der Sender die Zahl der Verpackungen eines Formates unterschreiten. Bei dem Verteiler kann es sich beispielsweise um lichtleitende und/oder um reflektierende Komponenten handeln. Alternativ oder zusätzlich können zwischen den Verpackungen und dem Empfänger ein Sammler vorgesehen sein, der die elektromagnetischen Wellen, die aus mehreren Verpackungen abgestrahlt werden, bündelt und dem Empfänger zuleitet. Auch bei dem Sammler kann es sich um eine lichtleitende oder reflektierende Komponente handeln. Vorzugsweise sind der Verteiler und der Sammler zumindest teilweise dasselbe Bauteil.

Noch ein weiterer nicht beanspruchter Gegenstand ist eine Verpackungsmaschine mit einem Temperatursensor, der die Temperatur der Verpackungsmulde und/oder der Oberfolie und/oder der Atmosphäre in der Verpackung und/oder eines Verpackungsguts und/oder einer Reflexionsfläche misst. Vorzugsweise ist der Temperatursensor Teil des Sensors, der einen Bestandteil der Atmosphäre misst. Besonders bevorzugt ist der Sensor ein Infrarotsensor.

Vorzugsweise wird die Konzentration einer Komponente der Gasphase in der Verpackung mehrfach bestimmt, um Veränderungen über die Zeit festzustellen. Diese Veränderungen werden vorzugsweise durch eine Druckveränderung in der Verpackung und/oder in der Umgebung der Verpackung beschleunigt. Vorzugsweise handelt es sich bei dem Mittel, das den Druck in der Verpackung insbesondere kurzzeitig und reversibel erhöht, um eine Walze oder mehrere Walzen, die die Verpackung zumindest lokal allein und/oder im Zusammenspiel miteinander etwas zusammendrückt. Alternativ oder zusätzlich ist das Mittel Teil eines sogenannten Labellers, der an den Verpackungen Etiketten anbringt. Diese Etiketten, werden mit sogenannten Absetzstempeln auf die Verpackung gedrückt. Diese Absetzstempel können beispielsweise dazu eingesetzt werden den Druck in der Verpackung kurzzeitig sowie reversibel zu erhöhen. Der zweite Sensor ist bei dieser Ausführungsform der Verpackungsmaschine stromabwärts von dem Labeller vorgesehen. Alternativ oder zusätzlich ist das Mittel eine Unterdruckkammer, durch die jede Verpackung geführt wird. Ist die Verpackung undicht, verändert sich durch den Unterdruck die Zusammensetzung des Gases in der Verpackung und/oder in der Unterdruckkammer und/oder der Druck in der Unterdruckkammer.

Vorzugsweise weist die Verpackungsmaschine einen Labeller auf, der mindestens einen Gaskonzentrationsmesswert auf ein Etikett an der Verpackung überträgt.

Im Folgenden wird die Erfindung anhand der Figuren erläutert. Diese Erläuterungen sind lediglich beispielhaft und schränken den allgemeinen Erfindungsgedanken nicht ein. Die Erläuterungen gelten für alle Gegenstände der vorliegenden Erfindung gleichermaßen.
- **Figur 1**: zeigt eine Verpackungsmaschine
- **Figuren 2 - 4**: zeigen jeweils eine Ausführungsform des erfindungsgemäßen Verfahrens

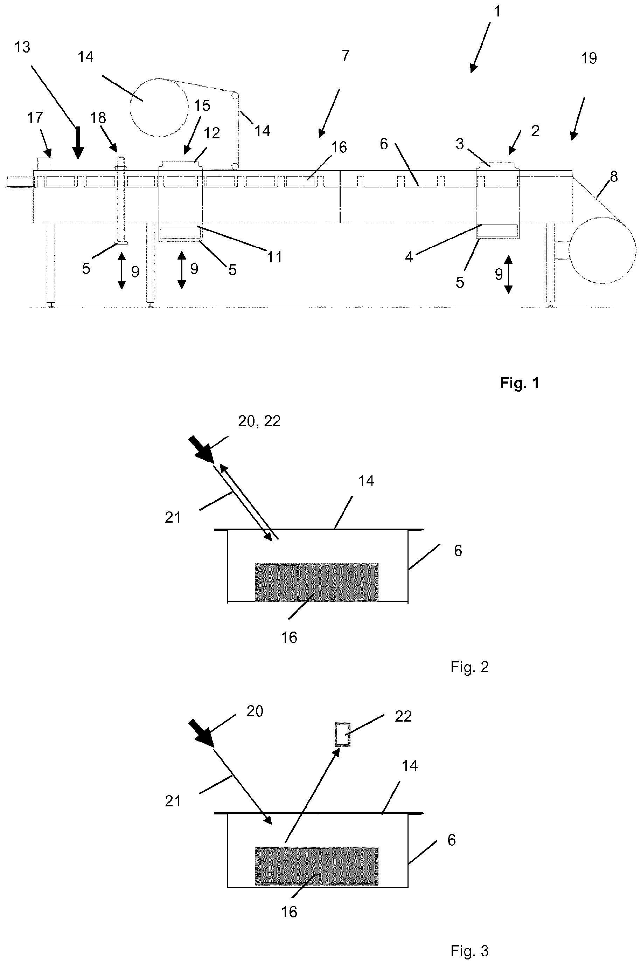

**Figur 1** zeigt die Verpackungsmaschine 1, die in dem vorliegenden Fall eine Tiefziehstation 2, eine Füllstation 7 sowie eine Siegelstation 15 aufweist. Eine Kunststofffolienbahn 8, die sogenannte Unterfolienbahn, wird von einer Vorratsrolle abgezogen und, vorzugsweise taktweise, entlang der Verpackungsmaschine hier von rechts nach links transportiert. Bei einem Takt wird die Folienbahn um eine Formatlänge weitertransportiert und es wird bei jedem Takt ein Format von X x Y Verpackungen hergestellt. Für den Transport der Folienbahn 8 weist die Verpackungsmaschine zwei Transportmittel (nicht dargestellt), in dem vorliegenden Fall jeweils zwei Endlosketten auf, die rechts und links von der Folienbahn angeordnet sind. Jede Endloskette weist Haltemittel auf, die jeweils mit einer Kante der Folienbahn zusammenwirken. Sowohl am Anfang als auch am Ende der Verpackungsmaschine ist für jede Kette jeweils mindestens ein Zahnrad vorgesehen, um das die jeweilige Kette umgelenkt wird. Mindestens eines dieser Zahnräder ist angetrieben. Die Zahnräder im Einlaufbereich 19 und/oder im Auslaufbereich können jeweils miteinander, vorzugsweise durch eine starre Welle, verbunden sein. Jedes Transportmittel weist eine Vielzahl von Klemmmitteln auf, die die Unterfolienbahn 8 im Einlaufbereich klemmend ergreifen und die Bewegung des Transportmittels auf die Unterfolienbahn 8 übertragen. Im Auslaufbereich der Verpackungsmaschine wird die klemmende Verbindung zwischen dem Transportmittel und der Unterfolienbahn wieder gelöst. In der Tiefziehstation 2, die über ein Oberwerkzeug 3 und ein Unterwerkzeug 4 verfügt, das die Form der herzustellenden Verpackungsmulde aufweist, werden die Verpackungsmulden 6 in die Unterfolienbahn 8 eingeformt. Das Unterwerkzeug 4 ist auf einem Hubtisch 5 angeordnet, der, wie durch den Doppelpfeil symbolisiert wird, vertikal verstellbar ist. Vor jedem Folienvorschub wird das Unterwerkzeug 4 abgesenkt und danach wieder angehoben. Im weiteren Verlauf der Verpackungsmaschine werden die Verpackungsmulden dann in der Füllstation 7 mit dem Verpackungsgut 16 gefüllt. In der sich daran anschließenden Siegelstation 19, die ebenfalls aus einem Oberwerkzeug 12 und einem vertikal verstellbaren Unterwerkzeug 11 besteht, wird eine Oberfolienbahn auf die Verpackungsmulde gesiegelt. Auch in der Siegelstation werden das Oberwerkzeug und/oder das Unterwerkzeug vor und nach jedem Folientransport abgesenkt bzw. angehoben. Auch die Oberfolienbahn 14 kann tiefgezogen und/oder in Transportmitteln geführt sein bzw. von Transportketten transportiert werden, wobei sich diese Transportmittel dann nur von der Siegelstation und ggf. stromabwärts erstrecken. Ansonsten gelten die Ausführungen, die zu den Transportmitteln der Unterfolienbahn gemacht wurden. In der Siegelstation findet vorzugsweise ein Gasaustausch statt, um beispielsweise den Sauerstoffgehalt der Atmosphäre in der Verpackung zu reduzieren. Im weiteren Verlauf der Verpackungsmaschine werden auch die fertiggestellten Verpackungen vereinzelt, was mit dem Schneidwerkzeugen 17, 18 erfolgt. Das Schneidwerkzeug 18 ist in dem vorliegenden Fall ebenfalls mit einer Hubeinrichtung 9 anhebbar bzw. absenkbar. Der Fachmann erkennt, dass bei einem Takt vorzugsweise mehrere Verpackungsmulden tiefgezogen, befüllt und verschlossen werden.

Die Verpackungsmaschine weist zumindest ein Messgerät, beispielsweise einen Sender 20 auf, der elektromagnetische Wellen in vorzugsweise jede Verpackung sendet, die dort konzentrationsabhängig von mindestens einer Komponente der Gasphase der Verpackung verändert werden. Diese Veränderung wird von einem Empfänger 22, der Strahlung aus der Verpackung empfängt, durch eine Spektralanalyse festgestellt. Vorzugsweise ist ein Sensor pro Packung oder ein Sensor für mehrere Packungen, beispielsweise für eine Reihe oder eine Spalte eines Formates oder für ein gesamtes Format vorhanden.

**Figur 2** zeigt eine erste Ausführungsform des erfindungsgemäßen Verfahrens. Ein Sender 20 strahlt elektromagnetische Wellen, beispielsweise Laserlicht, das von einer Laserdiode erzeugt wird, ab, die die Deckelfolie 14 durchdringt und auf die Gasatmosphäre in der Verpackung trifft und dort konzentrationsabhängig von mindestens einer Komponente der Gasphase verändert wird. Diese veränderte Strahlung wird von der Gasphase in Richtung eines Empfängers reflektiert, der die Veränderung der Gasphase ermittelt.

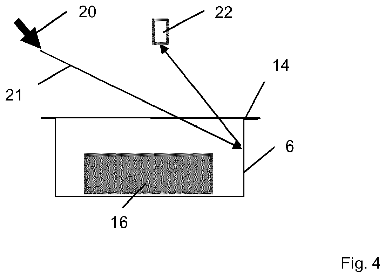

Bei den Ausführungsformen gemäß den Figuren 3 und 4 kann im Wesentlichen auf die Ausführungen gemäß Figur 2 Bezug genommen werden, wobei bei der Ausführungsform gemäß Figur 3 alternativ oder zusätzlich eine Reflektion der veränderten Strahlung an dem Verpackungsgut 16 und bei der Ausführungsform gemäß Figur 4 eine Reflektion der veränderten Strahlung an der Verpackung erfolgt, die jeweils von einem Empfänger 22 aufgefangen wird.

### Bezugszeichenliste:

- 1: Verpackungsmaschine
- 2: Tiefziehstation
- 3: Oberwerkzeug der Tiefziehstation
- 4: Unterwerkzeug der Tiefziehstation
- 5: Hubtisch, Träger eines Werkzeugs der Siegel-, Tiefziehstation und/oder der Schneideinrichtung
- 6: Verpackungsmulde
- 7: Füllstation
- 8: Unterfolienbahn
- 9: Hubeinrichtung
- 10: fertiggestellte Verpackung
- 11: Unterwerkzeug der Siegelstation
- 12: Oberwerkzeug der Siegelstation
- 13: Sensor, Sauerstoffsensor
- 14: Oberfolie
- 15: Siegelstation
- 16: Verpackungsgut
- 17: Längsschneider
- 18: Querschneider
- 19: Einlaufbereich
- 20: Sender
- 21: Elektromagnetische Wellen, Strahlung
- 22: Empfänger

## Patentansprüche

1. Verfahren zur Bestimmung der Konzentration mindestens einer Komponente der Gasphase in einer Verpackung (6), in der ein Verpackungsgut (16) verpackt ist, mit einem Sensor (13), der einen Sender (20) aufweist, der elektromagnetische Wellen (21) in die Verpackung (6) ausstrahlt, die von einem Empfänger; (22) zumindest teilweise aufgefangen und einer Analyse, vorzugsweise einer Spektralanalyse unterzogen werden, wobei die vom Sender (20) ausgesendeten elektromagnetischen Wellen nach dem Verlassen des Senders (20) zuerst die die Verpackung umgebende Atmosphäre durchlaufen, dann die Oberfolie (14) der geschlossenen Verpackung, anschließend die Atmosphäre in der Verpackung und werden von einer Gasphase dieser Atmosphäre und/oder dem Verpackungsgut (16) und/oder einem Reflektor in Richtung des Empfängers (22) reflektiert und durchlaufen im Folgenden zunächst zumindest wieder einen Teil der Atmosphäre in der Verpackung, dann die Oberfolie (14) und abschließend die die Verpackung umgebende Atmosphäre, bevor sie vom Empfänger (22) empfangen werden, **dadurch gekennzeichnet dass** der Empfänger (22) kalibriert wird und dass bei der Kalibrierung der Einfluss der Verpackung (6) und des Verpackungsgutes (16) berücksichtigt wird..

2. Verfahren nach Anspruch 1, **dadurch gekennzeichnet, dass** die Wellen von der Verpackung (6) reflektiert werden.

3. Verfahren nach einem der voranstehenden Ansprüche, **dadurch gekennzeichnet, dass** Reflexionsflächen vorgesehen werden, die die Wellen reflektieren und/oder gezielt umlenken.

4. Verfahren nach einem der voranstehenden Ansprüche, **dadurch gekennzeichnet, dass** die Temperatur der Gasphase, des Verpackungsgutes (16) und/oder der Verpackung (6, 14) gemessen und bei der Analyse, vorzugsweise der Spektralanalyse und/oder bei der Kalibrierung berücksichtigt.

5. Verfahren nach einem der voranstehenden Ansprüche, **dadurch gekennzeichnet, dass** der Druck in der Verpackung (6, 14) gemessen und bei der Analyse, vorzugsweise der Spektralanalyse und/oder bei der Kalibrierung berücksichtigt wird.

6. Verfahren nach einem der voranstehenden Ansprüche, **dadurch gekennzeichnet, dass** jede Verpackung (6) einzeln untersucht wird.

7. Verfahren nach einem der voranstehenden Ansprüche, **dadurch gekennzeichnet, dass** eine Verpackung (6) mehrfach untersucht wird.

8. Verfahren nach einem der voranstehenden Ansprüche, **dadurch gekennzeichnet, dass** sich die Verpackung (6) bei der Messung bewegt.

9. Verfahren nach einem der voranstehenden Ansprüche, **dadurch gekennzeichnet, dass** die Analyse der empfangenen Strahlung mittels Raman-Spektroskopie durchgeführt wird.

10. Verfahren nach einem der Ansprüche 1 bis 8, **dadurch gekennzeichnet, dass** die Analyse der empfangenen Strahlung mittels Laser Absorptionsspektroskopie (LAS) oder abstimmbare Diodenlaserabsorptionsspektroskopie (Tuneable Diode Laser Absorption Spectroscopy TDLAS) durchgeführt wird.

11. Verfahren nach einem der Ansprüche 1 bis 8, **dadurch gekennzeichnet, dass** die Analyse der empfangenen Strahlung mittels ESR-Oxymetrie bzw. ESR-Spektroskopie durchgeführt wird.

12. Verfahren nach einem der voranstehenden Ansprüche, **dadurch gekennzeichnet, dass** insbesondere der Teil der empfangenen Strahlung identifiziert und einer Analyse unterzogen wird, der die Atmosphäre in der Verpackung zumindest teilweise durchlaufen bzw. durchstrahlt hat und in Richtung des Empfängers (22) reflektiert wurde.

13. Verfahren nach einem der voranstehenden Ansprüche, **dadurch gekennzeichnet, dass** insbesondere der Teil der empfangenen Strahlung, der nur von der die Verpackung umgebenden Atmosphäre und/oder der Außenfläche der Verpackung (6) J Z reflektiert wird, identifiziert und/oder gezielt berücksichtigt und/oder gefiltert wird.

14. Verfahren nach einem der voranstehenden Ansprüche, **dadurch gekennzeichnet, dass** die elektromagnetischen Wellen getaktet ausgesendet werden, wobei bevorzugt Wellenpakete ausgesendet werden, die von jeweils gleicher und/oder unterschiedlicher Länge sind und die von Sendepausen beabstandet werden, die von ganz besonders bevorzugt von jeweils gleicher und/oder unterschiedlicher Länge sind und/oder noch mehr bevorzugt die Wellenpakete und/oder Sendepausen als Mustern gestaltet sind.

15. Verfahren nach einem der voranstehenden Ansprüche, **dadurch gekennzeichnet, dass** die die Verpackung umgebende Atmosphäre so gestaltet ist, dass sie die eine oder mehreren Komponenten der Gasphase innerhalb der Verpackung (6), deren Konzentration ermittelt werden soll, nicht enthält.

## Claims

1. Method for determining the concentration of at least one component of the gas phase in a package (6), in which a packaged commodity (16) is packaged, comprising a sensor (13) which has a transmitter (20) that emits electromagnetic waves (21) into the package (6), said electromagnetic waves being received by a receiver (22) at least in part and being subjected to an analysis, preferably a spectral analysis, wherein, after leaving the transmitter (20), the electromagnetic waves emitted by the transmitter (20) initially pass through the atmosphere surrounding the package, then pass through the top film (14) of the sealed package and subsequently pass through the atmosphere in the package and said electromagnetic waves are reflected in the direction of the receiver (22) by a gaseous phase of this atmosphere and/or the packaged commodity (16) and/or a reflector and subsequently initially pass through at least some of the atmosphere in the package again, then pass through the top film (14) and finally pass through the atmosphere surrounding the package before said electromagnetic waves are received by the receiver (22), **characterized in that** the receiver (22) is calibrated and **in that** the influence of the package (6) and the packaged commodity (16) is taken into account.

2. Method according to Claim 1, **characterized in that** the waves are reflected by the package (6).

3. Method according to either of the preceding claims, **characterized in that** reflection surfaces are provided, which reflect and/or, in a targeted manner, deflect the waves.

4. Method according to any one of the preceding claims, **characterized in that** the temperature of the gaseous phase, of the packaged commodity (16) and/or of the package (6, 14) is measured and taken into account during the analysis, preferably that spectral analysis, and/or during the calibration.

5. Method according to any one of the preceding claims, **characterized in that** the pressure in the package (6, 14) is measured and taken into account during the analysis, preferably that spectral analysis, and/or during the calibration.

6. Method according to any one of the preceding claims, **characterized in that** each package (6) is examined individually.

7. Method according to any one of the preceding claims, **characterized in that** the package (6) is examined multiple times.

8. Method according to any one of the preceding claims, **characterized in that** the package (6) moves during the measurement.

9. Method according to any one of the preceding claims, **characterized in that** the analysis of the received radiation is performed by means of Raman spectroscopy.

10. Method according to any one of Claims 1 to 8, **characterized in that** the analysis of the received radiation is performed by means of laser absorption spectroscopy (LAS) or tuneable diode laser absorption spectroscopy (TDLAS).

11. Method according to any one of Claims 1 to 8, **characterized in that** the analysis of the received radiation is performed by means of ESR oximetry or ESR spectroscopy.

12. Method according to any one of the preceding claims, **characterized in that** the part of the received radiation which, in particular, has at least partly passed through or been radiated through the atmosphere in the package and which was reflected in the direction of the receiver (22) is identified and subjected to an analysis.

13. Method according to any one of the preceding claims, **characterized in that** the part of the received radiation which, in particular, was only reflected by the atmosphere surrounding the package and/or the outer surface of the package (6) is identified and/or, in a targeted fashion, taken into account and/or filtered.

14. Method according to any one of the preceding claims, **characterized in that** the electromagnetic waves are emitted in pulsed fashion, wherein wave packets are preferably emitted, which each have the same length and/or different lengths and which are spaced apart by transmission pauses which, very particularly preferably, each have the same length and/or different lengths, and/or, even more preferably, the wave packets and/or transmission pauses are configured as patterns.

15. Method according to any one of the preceding claims, **characterized in that** the atmosphere surrounding the package is designed in such a way that it does not contain one or more components of the gaseous phase within the package (6), the concentration of which is intended to be ascertained.

## Revendications

1. Procédé de détermination de la concentration d'au moins une composante de la phase gazeuse dans un emballage (6) dans lequel est emballé un produit à emballer (16), comprenant un capteur (13) qui possède un émetteur (20), lequel émet des ondes électromagnétiques (21) dans l'emballage (6), lesquelles sont au moins partiellement reçues par un récepteur (22) et sont soumises à une analyse, de préférence une analyse spectrale, les ondes électromagnétiques émises par l'émetteur (20), après avoir quitté l'émetteur (20), traversant tout d'abord l'atmosphère qui entoure l'emballage, puis le film supérieur (14) de l'emballage fermé et finalement l'atmosphère dans l'emballage et étant réfléchies par une phase gazeuse dans cette atmosphère et/ou un produit à emballer (16) et/ou un réflecteur en direction du récepteur (22) et traversant ensuite tout d'abord au moins de nouveau une partie de l'atmosphère dans l'emballage, ensuite le film supérieur (14) et finalement l'atmosphère qui entoure l'emballage avant qu'elles soient reçues par le récepteur (22), **caractérisé en ce que** le récepteur (22) est étalonné et **en ce que** l'influence de l'emballage (6) et du produit à emballer (16) est prise en compte lors de l'étalonnage.

2. Procédé selon la revendication 1, **caractérisé en ce que** les ondes sont réfléchies par l'emballage (6).

3. Procédé selon l'une des revendications précédentes, **caractérisé en ce que** des surfaces réfléchissantes sont présentes, lesquelles réfléchissent les ondes et/ou les dévient de manière ciblée.

4. Procédé selon l'une des revendications précédentes, **caractérisé en ce que** la température de la phase gazeuse, du produit à emballer (16) et/ou de l'emballage (6, 14) est mesurée et prise en compte lors de l'analyse, de préférence de l'analyse spectrale et/ou lors de l'étalonnage.

5. Procédé selon l'une des revendications précédentes, **caractérisé en ce que** la pression dans l'emballage (6, 14) est mesurée et prise en compte lors de l'analyse, de préférence de l'analyse spectrale et/ou lors de l'étalonnage.

6. Procédé selon l'une des revendications précédentes, **caractérisé en ce que** chaque emballage (6) est examiné individuellement.

7. Procédé selon l'une des revendications précédentes, **caractérisé en ce qu'**un emballage (6) est examiné plusieurs fois.

8. Procédé selon l'une des revendications précédentes, **caractérisé en ce que** l'emballage (6) se déplace lors de la mesure.

9. Procédé selon l'une des revendications précédentes, **caractérisé en ce que** l'analyse du rayonnement reçu est effectuée au moyen d'une spectroscopie Raman.

10. Procédé selon l'une des revendications 1 à 8, **caractérisé en ce que** l'analyse du rayonnement reçu est effectuée au moyen d'une spectroscopie d'absorption laser (LAS) ou d'une spectroscopie d'absorption par diode laser accordable (Tunable diode laser absorption spectroscopy - TDLAS).

11. Procédé selon l'une des revendications 1 à 8, **caractérisé en ce que** l'analyse du rayonnement reçu est effectuée au moyen de l'oxymétrie ESR ou de la spectroscopie ESR.

12. Procédé selon l'une des revendications précédentes, **caractérisé en ce que** la partie du rayonnement qui est identifiée et soumise à une analyse est notamment celle qui a traversé ou irradié au moins partiellement l'atmosphère dans l'emballage et a été réfléchie en direction du récepteur (22).

13. Procédé selon l'une des revendications précédentes, **caractérisé en ce que** la partie du rayonnement qui est identifiée et/ou prise en compte de manière ciblée et/ou filtrée est notamment celle qui a seulement été réfléchie par l'atmosphère qui entoure l'emballage et/ou la surface extérieure de l'emballage (6).

14. Procédé selon l'une des revendications précédentes, **caractérisé en ce que** les ondes électromagnétiques sont émises de manière cadencée, des paquets d'ondes étant de préférence émis, lesquels sont respectivement de longueur identique et/ou différente et lesquels sont espacés par des pauses d'émission qui sont tout particulièrement préférablement respectivement de longueur identique et/ou différente et/ou encore plus préférablement les paquets d'ondes et/ou les pauses d'émission étant configurés en tant que modèles.

15. Procédé selon l'une des revendications précédentes, **caractérisé en ce que** l'atmosphère qui entoure l'emballage est configurée de telle sorte qu'elle ne contient pas une ou plusieurs des composantes de la phase gazeuse à l'intérieur de l'emballage (6) dont il faut déterminer la concentration.
